# EUROPEAN PATENT APPLICATION

(11) **EP 2 637 451 A1**
(43) Date of publication of application: **11.09.2013**
(21) Application number: 12764363.3
(22) Date of filing: 23.02.2012
(51) Int. Cl.: H04W 36/14, H04W 36/30

(54) **METHOD AND TERMINAL FOR RESELECTING PS CONNECTED STATE**

(30) Priority: 01.04.2011 CN 201110081974
(71) Applicant: Huawei Technologies Co., Ltd., Shenzhen, Guangdong 518129 (CN)
(72) Inventor: XIA, Qingfan, Shenzhen Guangdong 518129 (CN)
(74) Representative: Pfenning, Meinig & Partner GbR
(86) International application number: PCT/CN2012/071496
(87) International publication number: WO 2012/130003

(57) **Abstract**

The present invention discloses a reselection method and terminal for a PS connected state, and belongs to the communications field. In the present invention, when a network side changes a cell reselection parameter or when an intra-system cell handover occurs, a SIB3 delivered by the network side is read, and a SIB6 and/or SIB7 is read, signal strength measurement is performed on an LTE frequency point and an inter-system frequency point, and when requirements of a first threshold and an inter-system reselection threshold are satisfied, a cell reselection operation is performed, which overcomes a defect that an inter-system cell reselection operation cannot be performed on a conventional terminal even though the quality of an LTE signal is very poor when the terminal is set to an LTE only mode, and brings better service experience to a user.

## Description

### TECHNICAL FIELD

The present invention relates to the communications field, and in particular, to a reselection method and terminal for a PS connected state.

### BACKGROUND

In a communications network, common voice services and short message services are mainly provided by a CS (Circuit Switched, circuit switched) domain, and data services are mainly provided by a PS (Packet Switched, packet switched) domain at present.

With the development of technologies, the LTE (Long Term Evolution, long term evolution) technology develops fast, and for a voice solution of the LTE, the 3GPP (3rd Generation Partnership Project, 3rd generation partnership project) finally adopts an LTE + IMS (IP Multimedia Subsystem, IP multimedia subsystem) solution to support voice services. However, as operators deploy the IMS late at present, an alternative solution CSFB (CS FallBack, circuit domain fallback) needs to be used for a relative long time.

The CSFB technology is implemented by letting a terminal camping on an LTE cell fall back to a 2G or 3G CS domain in a manner such as redirection, PS handover, and cell change command and then performing a conventional CS domain voice call. Therefore, a terminal is required to be a dual-mode or multi-mode terminal, and GSM (Global System For Mobile Communications, global system for mobile communications), UTRAN (UMTS Terrestrial Radio Access Network, UMTS terrestrial radio access network), and LTE networks will coexist for a long time.

When an existing ordinary dual-mode terminal works in dual modes, by taking an LTE/GSM dual-mode terminal as an example for illustration, as a PS is established in an LTE network and is in a connected state, the LTE network delivers an inter-system B1 or B2 measurement configuration, the terminal executes a measurement operation according to the measurement configuration of the network, and when a condition of the measurement configuration is satisfied, reports a measurement report, and the network directs the terminal to handover to an network of different system.

However, the inventor finds that the prior art has the following defects:

In some terminals, due to restrictions of chips or other reasons, an LTE module is set to fixedly work in an LTE only mode, and therefore an LTE network neither delivers an inter-system B1 or B2 measurement configuration to an LTE only terminal, nor delivers an inter-system handover command to the terminal, causing that the terminal cannot be handed over or redirected to a different system when the quality of the LTE network does not satisfy a PS service requirement, which affects a use effect of a user.

### SUMMARY

To solve a problem existing in the prior art, the present invention provides a reselection method and terminal for a PS connected state, and the technical solutions are as follows:

A reselection method for a packet switched PS connected state is disclosed, where the method includes:
reading a third system information block SIB3 delivered by a network side and reading a sixth system information block SIB6 and/or a seventh system information block SIB7, when cell system information changes or an intra-system cell handover occurs;
obtaining a first threshold and a long term evolution LTE frequency point according to the SIB3, and obtaining an inter-system reselection threshold and an inter-system frequency point according to the SIB6 and/or SIB7;
performing signal strength measurement on the LTE frequency point and the inter-system frequency point; and
reselecting a corresponding inter-system cell for a PS service, if signal strength measured on the LTE frequency point is lower than the first threshold and signal strength measured on the inter-system frequency point is higher than the inter-system reselection threshold.

Further, the SIB7 includes a second threshold and a global system for mobile communications GSM frequency point; and
correspondingly, when the inter-system threshold is the second threshold, and the inter-system frequency point is the GSM frequency point, before the reselecting a corresponding inter-system cell for a PS service, the method further includes:
determining whether a terminal and the corresponding inter-system cell support a dual transfer mode DTM;
if the terminal and the corresponding inter-system cell support the DTM, reselecting the corresponding inter-system cell for the PS service; and
if the terminal and the corresponding inter-system cell do not support the DTM, reselecting the corresponding inter-system cell for the PS service after a circuit switched CS service currently performed by the terminal is completed.

Further, the SIB6 includes a third threshold and a UMTS terrestrial radio access network UTRAN frequency point;
correspondingly, the inter-system reselection threshold includes the second threshold and/or the third threshold; and
the inter-system frequency point includes the GSM frequency point and/or the UTRAN frequency point.

Further, before the reading a SIB3 delivered by a network side and reading a SIB6 and/or a SIB7, the method further includes:
obtaining whether an inter-system cell on which a CS service currently performed by the terminal camps is a GSM cell or a UTRAN cell, so that the terminal determines a target inter-system cell to which the PS service is to be handed over.

Further, the performing signal strength measurement on the LTE frequency point and the inter-system frequency point, and if signal strength measured on the LTE frequency point is lower than the first threshold and signal strength measured on the inter-system frequency point is higher than the inter-system reselection threshold, reselecting a corresponding inter-system cell for a PS service, specifically includes:
when the inter-system cell on which the CS service currently performed by the terminal camps is a GSM cell, performing signal strength measurement on the LTE frequency point and the GSM frequency point, and if the signal strength measured on the LTE frequency point is lower than the first threshold and signal strength measured on the GSM frequency point is higher than the second threshold, reselecting the GSM cell for the PS service;
   or,
when the inter-system cell on which the CS service currently performed by the terminal camps is a UTRAN cell, performing signal strength measurement on the LTE frequency point and the UTRAN frequency point, and if signal strength measured on the LTE frequency point is lower than the first threshold and signal strength measured on the UTRAN frequency point is higher than the third threshold, reselecting the UTRAN cell for the PS service.

Further, the obtaining a first threshold according to the SIB3 specifically includes:
reading an LTE cell threshold in the SIB3, and using the LTE cell threshold as the first threshold;
   or,
reading an LTE cell threshold in the SIB3, and obtaining a difference between the LTE cell threshold and a preset offset to obtain the first threshold.

Further, before the obtaining the first threshold, the method further includes:
presetting the offset according to the corresponding inter-system cell and a quality-of-service requirement of a PS service currently performed by the terminal.

A reselection terminal for a PS connected state is disclosed, where the apparatus includes: an LTE module and an inter-system module; where
the LTE module includes:
a system information reading unit, configured to, when cell system information changes or an intra-system cell handover occurs, read a SIB3 delivered by a network side, and read a SIB6 and/or a SIB7;
a parameter obtaining unit, configured to obtain a first threshold and an LTE frequency point according to the SIB3, and obtain an inter-system reselection threshold and an inter-system frequency point according to the SIB6 and/or SIB7;
a first sending unit, configured to send the inter-system reselection threshold and inter-system frequency point to the inter-system module;
a first measurement unit, configured to perform signal strength measurement on the LTE frequency point; and
a first determining unit, configured to determine whether signal strength measured on the LTE frequency point is lower than the first threshold; and
the inter-system module includes:
a second measurement unit, configured to receive the inter-system reselection threshold and inter-system frequency point that are sent by the first sending unit, and perform signal strength measurement on the inter-system frequency point;
a second determining unit, configured to determine whether signal strength measured on the inter-system frequency point is higher than the inter-system reselection threshold; and
a reselection unit, configured to, when the signal strength measured on the LTE frequency point is lower than the first threshold and the signal strength measured on the inter-system frequency point is higher than the inter-system reselection threshold, receive a reselection command sent by the corresponding inter-system cell, and reselect a corresponding inter-system cell for a PS service.

Further, the SIB7 includes a second threshold and a GSM frequency point;
correspondingly, when the inter-system threshold is the second threshold, and the inter-system frequency point is the GSM frequency point, the inter-system module further includes:
a third determining unit, configured to, before the reselection unit reselects the corresponding inter-system cell for the PS service, determine whether the terminal and the corresponding inter-system cell support a DTM; if the terminal and the corresponding inter-system cell support the DTM, instruct the reselection unit to reselect the corresponding inter-system cell for the PS service; and if the terminal and the corresponding inter-system cell do not support the DTM, instruct the reselection unit to reselect the corresponding inter-system cell for the PS service after a circuit switched CS service currently performed by the terminal is completed.

Further, the SIB6 includes a third threshold and a UTRAN frequency point;
correspondingly, the inter-system reselection threshold includes the second threshold and/or the third threshold; and
the inter-system frequency point includes the GSM frequency point and/or the UTRAN frequency point.

Further, the inter-system module further includes:
a fourth determining unit, configured to, before the system information reading unit reads the SIB3 delivered by the network side, and reads the SIB6 and/or SIB7, obtain whether an inter-system cell on which the CS service currently performed by the terminal camps is a GSM cell or a UTRAN cell, so that the terminal determines a target inter-system cell to which the PS service is to be handed over.

Further, when the inter-system cell on which the CS service currently performed by the terminal camps is a GSM cell, the second measurement unit is specifically configured to perform signal strength measurement on the GSM frequency point;
the second determining unit is specifically configured to determine whether signal strength measured on the GSM frequency point is higher than the second threshold;
the reselection unit is specifically configured to, when the signal strength measured on the LTE frequency point is lower than the first threshold and the signal strength measured on the GSM frequency point is higher than the second threshold, receive a reselection command sent by the GSM cell, and reselect the GSM cell for the PS service;
correspondingly, when the inter-system cell on which the CS service currently performed by the terminal camps is a UTRAN cell, the second measurement unit is specifically configured to perform signal strength measurement on the UTRAN frequency point;
the second determining unit is specifically configured to determine whether signal strength measured on the UTRAN frequency point is higher than the third threshold; and
the reselection unit is specifically configured to, when the signal strength measured on the LTE frequency point is lower than the first threshold and the signal strength measured on the UTRAN frequency point is higher than the third threshold, start a cell reselection process, and reselect the UTRAN cell for the PS service.

Further, that the parameter obtaining unit obtains the first threshold according to the SIB3 specifically includes:
reading an LTE cell threshold in the SIB3, and using the LTE cell threshold as the first threshold;
   or,
reading an LTE cell threshold in the SIB3, and obtaining a difference between the LTE cell threshold and a preset offset to obtain the first threshold.

Further, the LTE module further includes:
an offset obtaining unit, configured to, before the parameter obtaining unit obtains the first threshold, preset the offset according to the corresponding inter-system cell and a quality-of-service requirement of a PS service currently performed by the terminal.

The beneficial effects of the technical solutions provided by embodiments of the present invention are as follows: in the present invention, when a network side changes a cell reselection parameter or when an intra-system cell handover occurs, a SIB3 delivered by the network side is read, and a SIB6 and/or a SIB7 is read, signal strength measurement is performed on an LTE frequency point and an inter-system frequency point, and when requirements of a first threshold and an inter-system reselection threshold are satisfied, a cell reselection operation is performed, which overcomes a defect that an inter-system cell reselection operation cannot be performed on a conventional terminal even though the quality of an LTE signal is very poor when the terminal is set to an LTE only mode, and brings better service experience to a user.

### BRIEF DESCRIPTION OF DRAWINGS

To illustrate the technical solutions in the embodiments of the present invention more clearly, accompanying drawings required for describing the embodiments are briefly introduced in the following. Apparently, the accompanying drawings in the following description merely show some embodiments of the present invention, and persons of ordinary skill in the art may still derive other drawings from these accompanying drawings without creative efforts.

FIG. 1 is a flow chart of a reselection method for a PS connected state according to Embodiment 1 of the present invention;

FIG. 2 is a flow chart of a reselection method for a PS connected state according to Embodiment 2 of the present invention;

FIG. 3 is a flow chart of a reselection method for a PS connected state according to Embodiment 3 of the present invention;

FIG. 4 is a flow chart of a reselection method for a PS connected state according to Embodiment 4 of the present invention;

FIG. 5 is a flow chart of a reselection method for a PS connected state according to Embodiment 5 of the present invention;

FIG. 6 is a flow chart of a reselection method for a PS connected state according to Embodiment 6 of the present invention;

FIG. 7 is a flow chart of a reselection method for a PS connected state according to Embodiment 7 of the present invention;

FIG. 8 is a flow chart of a reselection method for a PS connected state according to Embodiment 8 of the present invention;

FIG. 9 is a flow chart of a reselection method for a PS connected state according to Embodiment 9 of the present invention;

FIG. 10 is a schematic structural diagram of a reselection terminal for a PS connected state according to Embodiment 10 of the present invention;

FIG. 11 is a second schematic structural diagram of an inter-system module in a reselection terminal for a PS connected state according to Embodiment 10 of the present invention;

FIG. 12 is a third schematic structural diagram of an inter-system module in a reselection terminal for a PS connected state according to Embodiment 10 of the present invention; and

FIG. 13 is a second schematic structural diagram of an LTE module in a reselection terminal for a PS connected state according to Embodiment 10 of the present invention.

### DESCRIPTION OF EMBODIMENTS

To make the objectives, technical solutions, and advantages of the present invention clearer, the embodiments of the present invention are further described in the following with reference to the accompanying drawings.

### Embodiment 1

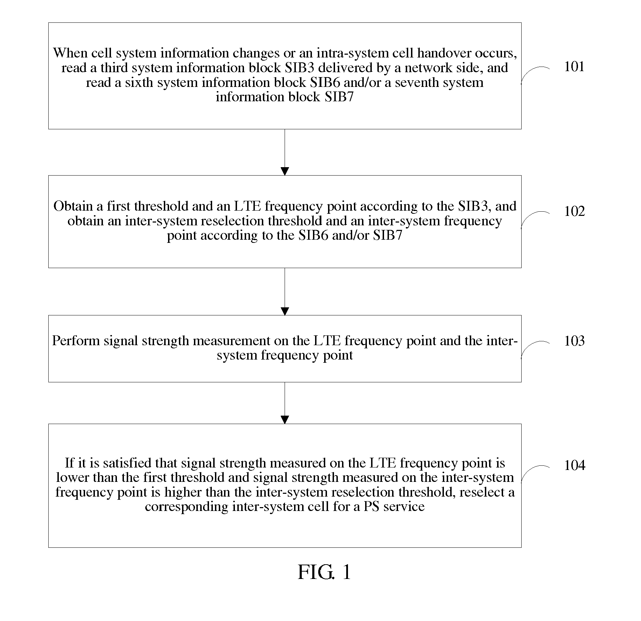

As shown in FIG. 1, an embodiment of the present invention provides a reselection method for a PS connected state, and the method includes:

101: When cell system information changes or an intra-system cell handover occurs, read a third system information block SIB3 delivered by a network side, and read a sixth system information block SIB6 and/or a seventh system information block SIB7.

102: Obtain a first threshold and an LTE frequency point according to the SIB3, and obtain an inter-system reselection threshold and an inter-system frequency point according to the SIB6 and/or SIB7.

103: Perform signal strength measurement on the LTE frequency point and the inter-system frequency point.

104: If it is satisfied that signal strength measured on the LTE frequency point is lower than the first threshold and signal strength measured on the inter-system frequency point is higher than the inter-system reselection threshold, reselect a corresponding inter-system cell for a PS service.

In the embodiment of the present invention, when the network side changes a cell reselection parameter or when the intra-system cell handover occurs, the SIB3 delivered by the network side is read, and the SIB6 and/or SIB7 is read, the signal strength measurement is performed on the LTE frequency point and the inter-system frequency point, and when requirements of a first threshold and an inter-system reselection threshold are satisfied, an inter-system cell reselection operation is performed, which overcomes a defect that an inter-system cell reselection operation cannot be performed on a conventional terminal even though the quality of an LTE signal is very poor when the terminal is set to an LTE only mode, and brings better service experience to a user.

### Embodiment 2

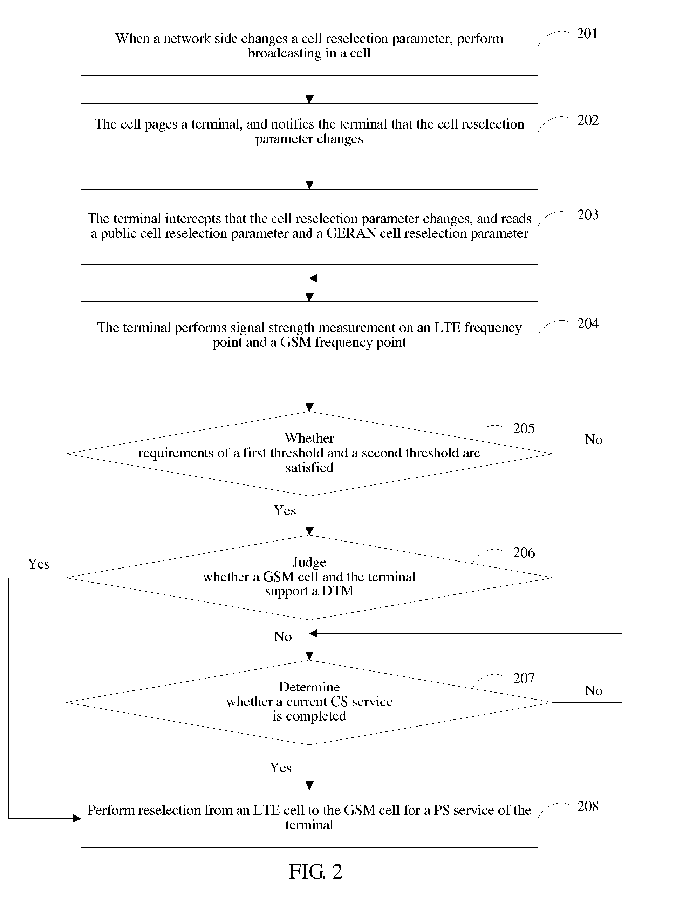

As shown in FIG. 2, an embodiment of the present invention provides a reselection method for a PS connected state, which is improved based on Embodiment 1.

In this embodiment, an example where a terminal is an LTE/GSM single-card dual-standby terminal is used for illustration, the terminal may support an LTE network standard and a GSM network standard, and before the terminal performs reselection for a PS service state, the terminal camps in an LTE network, establishes a data service in the LTE network, and is in a connected state, and the terminal camps on a cell and has not undergone a cell handover.

The connected state refers to that a signaling connection exists between the terminal and a network side, and is also referred to as a service state in some scenarios, for example, an RRC (Radio Resource Control, radio resource control) connection.

It should be noted that, in the present invention, the cell handover refers to that the terminal physically moves from one cell to another cell, and the two cells are cells in a same standard, and cell reselection refers to that the terminal performs reselection from a cell in one standard to a cell in another standard to perform a service.

A reselection method for a PS connected state specifically includes:

201: When a network side changes a cell reselection parameter, perform broadcasting in a cell.

In this embodiment, the cell reselection parameter at least includes a public cell reselection parameter, and further includes a UTRAN cell reselection parameter and/or a GERAN (GSM/EDGE Radio Access Network, GSM/EDGN, radio access network) cell reselection parameter.

Further, the public cell reselection parameter is a system information block SIB3, a system information block of a public parameter used for the terminal to perform intra-frequency point, inter-frequency point, and inter-system cell reselection.

The UTRAN cell reselection parameter is a system information block SIB6, a system information block that includes parameters such as a UTRAN frequency point and a threshold and is used for the terminal to perform UTRAN inter-system cell reselection.

The GERAN cell reselection parameter is a system information block SIB7, a system information block that includes parameters such as a GSM frequency point and a threshold and is used for the terminal to perform GSM inter-system cell reselection.

A SIB (System Information Block, system information block) is periodically delivered by the network side, and when reading, the terminal reads a system information block delivered in a next period, for example, the network side delivers system information blocks at intervals of time T, and when intending to read a system information block between time 3T and 4T, the terminal reads a system information block delivered by the network side at 4T.

202: The cell pages the terminal, and notifies the terminal that the cell reselection parameter changes.

203: The terminal intercepts that the cell reselection parameter changes, and reads the public cell reselection parameter and the GERAN cell reselection parameter.

It should be noted that, when the terminal used in this embodiment is an LTE/GSM single-card dual-standby terminal, when reading a system reselection parameter, the terminal only needs to read system information blocks SIB3 and SIB7, where read data includes an LTE frequency point and a GSM frequency point that are stipulated in the SIB3 and SIB7 and used to indicate frequencies on which the terminal performs signal strength measurement in the LTE network and a GSM network respectively, and includes a corresponding LTE cell threshold and GSM cell threshold in the SIB3 and SIB7.

The LTE cell threshold is specifically a CellReselectionServingFreqInfo (s-NonIntraSearch) threshold, when the terminal performs signal strength measurement on the LTE frequency point in an LTE cell and finds that an LTE cell threshold requirement is satisfied, the cell reselection is allowed, and the LTE cell threshold is contained in the public cell reselection parameter, namely, the system information block SIB3. The GSM cell threshold is specifically a frequency point threshold requirement corresponding to a GSM cell. When the terminal performs signal strength measurement on the GSM frequency point in the GSM cell and finds that a GSM cell threshold requirement is satisfied, the network side allows the terminal to be handed over to the GSM cell, and the GSM cell threshold is contained in the GERAN cell reselection parameter, namely, the system information block SIB7.

204: The terminal performs signal strength measurement on the LTE frequency point and the GSM frequency point.

205: Determine whether signal strength measured on the LTE frequency point by the terminal is lower than a first threshold, and signal strength measured on the GSM frequency point by the terminal is higher than a second threshold; if yes, perform step 206; and otherwise, return to step 204.

In this embodiment, the first threshold is specifically the LTE cell threshold, and the second threshold is specifically the GSM cell threshold.

Alternatively,
the first threshold may further be specifically a difference between the LTE cell threshold and a preset offset, and the second threshold is specifically the GSM cell threshold.

For the foregoing difference, specifically, the preset offset is preset according to Qos (Quality of Service, quality of service) requirements of different services. A service with a higher Qos requirement requires a higher first threshold, and therefore, when the offset is preset, the higher a Qos requirement of a service is, the smaller a value of an offset needs to be set. For example, an offset of a service with a high Qos requirement is 1 dbm, while an offset of a service with a low Qos requirement is 2 dbm, so as to ensure that the objective of trying the best to keep a PS service in an LTE network is achieved while service experience is not affected.

206: Determine whether the GSM cell and the terminal support a DTM (Dual Transfer Mode, dual transfer mode); if not, perform step 207; and if yes, perform step 208.

207: Determine whether a CS service currently performed is completed; if yes, perform step 208; and if not, wait and return to determine whether the CS service currently performed is completed, and perform step 208 after the CS service currently performed is completed.

208: Perform reselection from the LTE cell to the GSM cell for the PS service of the terminal.

In the reselection method for a PS connected state provided by the embodiment of the present invention, when the network side changes the cell reselection parameter, the terminal in the connected state performs the signal strength measurement on the LTE frequency point and GSM frequency point by receiving the cell reselection parameter sent by the network side, and when requirements of both the first threshold and second threshold are satisfied, performs a cell reselection operation, which overcomes a defect that an inter-system cell reselection operation cannot be performed on a conventional terminal even though the quality of an LTE signal is very poor when the terminal is set to an LTE only mode, and brings better service experience to a user.

### Embodiment 3

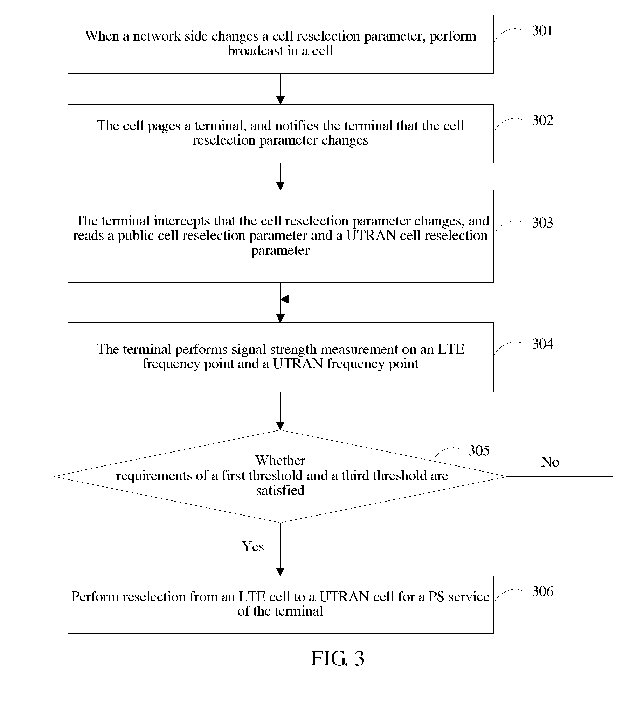

As shown in FIG. 3, an embodiment of the present invention provides a reselection method for a PS connected state, which is improved based on Embodiment 1.

In this embodiment, an example where a terminal is an LTE/UTRAN single-card dual-standby terminal is used for illustration, the terminal may support an LTE network standard and a UTRAN network standard, and before the terminal performs reselection for a PS service state, the terminal camps in an LTE network, establishes a data service in the LTE network, and is in a connected state, and the terminal camps on a cell and has not undergone a cell handover.

A reselection method for a PS connected state specifically includes:

301: When a network side changes a cell reselection parameter, perform broadcasting in a cell.

302: The cell pages the terminal, and notifies the terminal that the cell reselection parameter changes.

303: The terminal intercepts that the cell reselection parameter changes, and reads a public cell reselection parameter and a UTRAN cell reselection parameter.

It should be noted that, because the terminal used in this embodiment is an LTE/UTRAN single-card dual-standby terminal, when reading a system reselection parameter, the terminal only needs to read system information blocks SIB3 and SIB6, where read data includes an LTE frequency point and a UTRAN frequency point that are stipulated in the SIB3 and SIB6 and used to indicate frequencies on which the terminal performs signal strength measurement in the LTE network and a UTRAN network respectively, and includes a corresponding LTE cell threshold and UTRAN cell threshold in the SIB3 and SIB 6.

The LTE cell threshold is specifically a CellReselectionServingFreqInfo (s-NonIntraSearch) threshold, when the terminal performs signal strength measurement on the LTE frequency point in an LTE cell and finds that an LTE cell threshold requirement is satisfied, the cell reselection is allowed, and the LTE cell threshold is contained in the public cell reselection parameter, namely, a system information block SIB3. The UTRAN cell threshold is specifically a frequency point threshold requirement corresponding to a UTRAN cell. When the terminal performs signal strength measurement on the UTRAN frequency point in the UTRAN cell and finds that a UTRAN cell threshold requirement is satisfied, the network side allows the terminal to be handed over to the UTRAN cell, and the UTRAN cell threshold is contained in the UTRAN cell reselection parameter, namely, a system information block SIB6.

304: The terminal performs signal strength measurement on the LTE frequency point and the UTRAN frequency point.

305: Determine whether signal strength measured on the LTE frequency point by the terminal is lower than a first threshold, and signal strength measured on the UTRAN frequency point by the terminal is higher than a third threshold; if yes, perform step 306; and otherwise, return to step 304.

In this embodiment, the first threshold is specifically the LTE cell threshold, and the third threshold is specifically the UTRAN cell threshold.

Alternatively,
the first threshold is specifically a difference between the LTE cell threshold and a preset offset, and the third threshold is specifically the UTRAN cell threshold.

A method for presetting the offset is the same as that in Embodiment 2, and is not described here again.

It should be noted that, during offset presetting, the value of the offset is related to a radio access standard of a target network to be reselected by the terminal. For example, in a case where a UTRAN network and a GERAN network are in a same carrier-to-interference ratio due to a frequency expansion technology provided by the UTRAN, the UTRAN can provide higher Qos than the GERAN network, and therefore, for services with a same Qos requirement, the offset set when the target network is the UTRAN may be lower than the offset set when the target network is the GERAN. For example, the offset is set to 2 dbm when the target network is the UTRAN, and set to 4 dbm when the target network is the GERAN. In this way, it is ensured that migration of the terminal to the UTRAN network is easier than migration of the terminal to the GERAN network on the premise of guaranteeing the Qos requirement of a service in the LTE network.

306: Perform reselection from the LTE cell to the UTRAN cell for a PS service of the terminal.

In the reselection method for a PS connected state provided by the embodiment of the present invention, when the network side changes the cell reselection parameter, the terminal in the connected state performs the signal strength measurement on the LTE frequency point and the UTRAN frequency point through receiving the cell reselection parameter sent by the network side, and when requirements of both the first threshold and third threshold are satisfied, performs a cell reselection operation, which overcomes a defect that an inter-system cell reselection operation cannot be performed on a conventional terminal even though the quality of an LTE signal is very poor when the terminal is set to an LTE only mode, and brings better service experience to a user.

### Embodiment 4

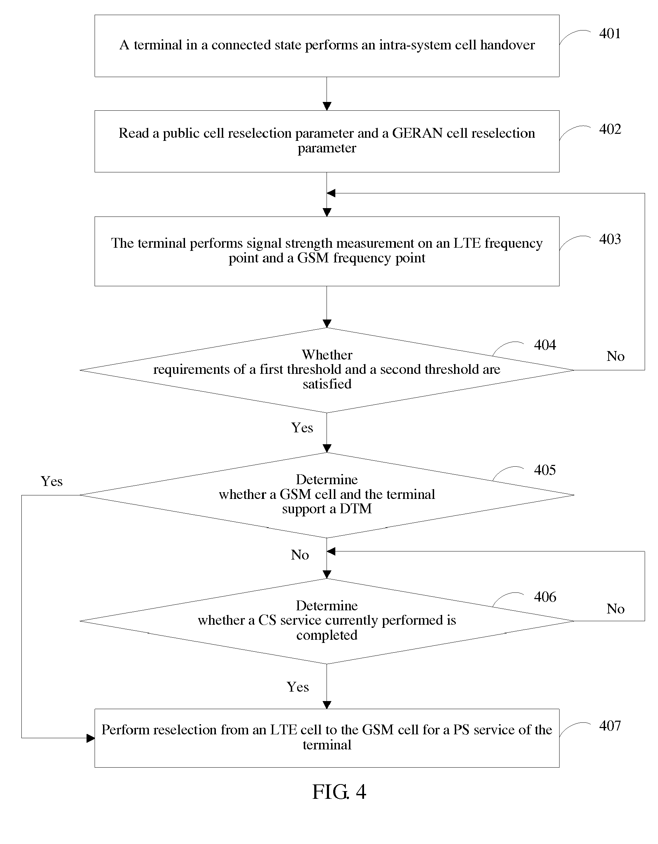

As shown in FIG. 4, an embodiment of the present invention discloses a reselection method for a PS connected state, which is improved based on the foregoing embodiments.

In this embodiment, an example where a terminal is an LTE/GSM single-card dual-standby terminal is used for illustration, the terminal may support an LTE network standard and a GSM network standard, and it is a method for performing reselection in case that the terminal has undergone a cell handover before the terminal performs reselection for a PS service state.

A reselection method for a PS connected state specifically includes:

401: A terminal in a connected state performs an intra-system cell handover.

It should be noted that, that the terminal in the connected state performs the intra-system cell handover refers to that the terminal undergoes a handover between cells in a same standard. For example, due to a change of a location, the terminal moves from a current LTE cell to a target LTE cell.

402: Read a public cell reselection parameter and a GERAN cell reselection parameter.

It should be noted that, because the terminal used in this embodiment is an LTE/GSM single-card dual-standby terminal, when reading a system reselection parameter, the terminal only needs to read system information blocks SIB3 and SIB7, where read data includes an LTE frequency point and a GSM frequency point that are stipulated in the SIB3 and SIB7 and used to indicate frequencies on which the terminal performs signal strength measurement in an LTE network and an GSM network respectively, and includes a corresponding LTE cell threshold and GSM cell threshold in the SIB3 and SIB7.

The LTE cell threshold is specifically a CellReselectionServingFreqInfo (s-NonIntraSearch) threshold, when the terminal performs signal strength measurement on the LTE frequency point in an LTE cell and finds that an LTE cell threshold requirement is satisfied, the cell reselection is allowed, and the LTE cell threshold is contained in the public cell reselection parameter, namely, a system information block SIB3. The GSM cell threshold is specifically a frequency point threshold requirement corresponding to a GSM cell. When the terminal performs signal strength measurement on the GSM frequency point in the GSM cell and finds that a GSM cell threshold requirement is satisfied, the network side allows the terminal to be handed over to the GSM cell, and the GSM cell threshold is contained in the GERAN cell reselection parameter, namely, a system information block SIB7.

403: The terminal performs signal strength measurement on the LTE frequency point and the GSM frequency point.

404: Determine whether signal strength measured on the LTE frequency point by the terminal is lower than a first threshold, and signal strength measured on the GSM frequency point by the terminal is higher than a second threshold; if yes, perform step 405; and otherwise, return to step 403.

In this embodiment, the first threshold is specifically the LTE cell threshold, and the second threshold is specifically the GSM cell threshold.

Alternatively,
the first threshold may further be specifically a difference between the LTE cell threshold and a preset offset, and the second threshold is specifically the GSM cell threshold.

For the foregoing difference of the offset, specifically, offsets are preset according to Qos requirements of different services. A service with a higher Qos requirement requires a higher threshold, and therefore, when the offset is preset, the higher a Qos requirement of a service is, the smaller a value of an offset needs to be set. For example, an offset of a service with a high Qos requirement is 1 dbm, while an offset of a service with a low Qos requirement is 2 dbm, so as to ensure that the objective of trying the best to keep a PS service in an LTE network is achieved while service experience is not affected.

405: Determine whether the GSM cell and the terminal support a DTM; if not, perform step 406; and if yes, perform step 407.

406: Determine whether a CS service currently performed is completed; if yes, perform step 407; and if not, wait and return to determine whether the CS service currently performed is completed, and perform step 407 after the CS service currently performed is completed.

407: Perform reselection from the LTE cell to the GSM cell for a PS service of the terminal.

In the reselection method for a PS connected state provided by the embodiment of the present invention, when the intra-system cell handover occurs, the terminal in the connected state reads the cell reselection parameter, and performs the signal strength measurement on the LTE frequency point and the GSM frequency point, and when requirements of both the first threshold and the second threshold are satisfied, performs a cell reselection operation, which overcomes a defect that an inter-system cell reselection operation cannot be performed on a conventional terminal even though the quality of an LTE signal is very poor when the terminal is set to an LTE only mode, and brings better service experience to a user.

### Embodiment 5

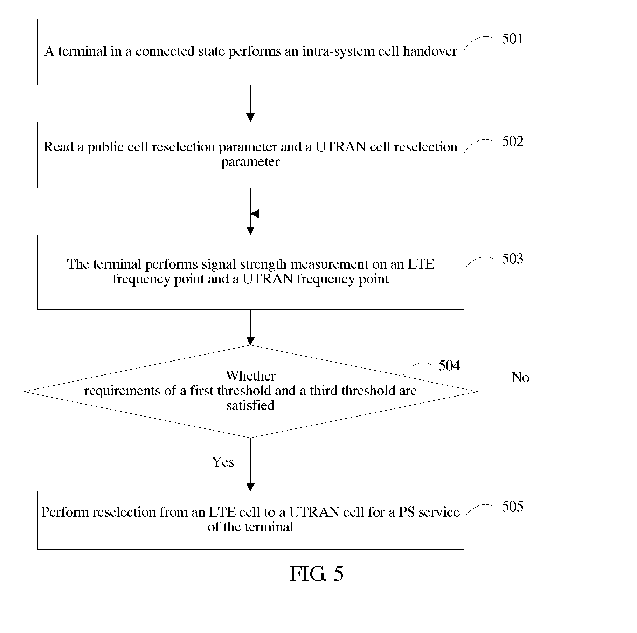

As shown in FIG. 5, a reselection method for a PS connected state in the present invention is improved based on the foregoing embodiments.

In this embodiment, an example where a terminal is an LTE/UTRAN single-card dual-standby terminal is used for illustration, the terminal may support an LTE network standard and a UTRAN network standard, and it is a method for performing reselection in a case that the terminal has undergone a cell handover before the terminal performs reselection for a PS service state.

A reselection method for a PS connected state specifically includes:

501: A terminal in a connected state performs an intra-system cell handover.

It should be noted that, that the terminal in the connected state performs the intra-system cell handover refers to that the terminal undergoes a handover between cells in a same standard. For example, due to a change of a location, the terminal moves from a current LTE cell to a target LTE cell.

502: Read a public cell reselection parameter and a UTRAN cell reselection parameter.

It should be noted that, because the terminal used in this embodiment is an LTE/UTRAN single-card dual-standby terminal, when reading a system reselection parameter, the terminal only needs to read system information blocks SIB3 and SIB6, where read data includes an LTE frequency point and a UTRAN frequency point that are stipulated in the SIB3 and SIB6 and used to indicate frequencies on which the terminal performs signal strength measurement in an LTE network and a UTRAN network respectively, and includes a corresponding LTE cell threshold and UTRAN cell threshold in the SIB3 and SIB 6.

The LTE cell threshold is specifically a CellReselectionServingFreqInfo (s-NonIntraSearch) threshold, when the terminal performs signal strength measurement on the LTE frequency point in an LTE cell and finds that an LTE cell threshold requirement is satisfied, the cell reselection is allowed, and the LTE cell threshold is contained in the public cell reselection parameter, namely, a system information block SIB3. The UTRAN cell threshold is specifically a frequency point threshold requirement corresponding to a UTRAN cell. When the terminal performs signal strength measurement on the UTRAN frequency point in the UTRAN cell and finds that a UTRAN cell threshold requirement is satisfied, the network side allows the terminal to be handed over to the UTRAN cell, and the UTRAN cell threshold is contained in the UTRAN cell reselection parameter, namely, a system information block SIB6.

503: The terminal performs signal strength measurement on the LTE frequency point and UTRAN frequency point.

504: Determine whether signal strength measured on the LTE frequency point by the terminal is lower than a first threshold, and signal strength measured on the UTRAN frequency point by the terminal is higher than a third threshold; if yes, perform step 505; and otherwise, return to step 503.

In this embodiment, the first threshold is specifically the LTE cell threshold, and the third threshold is specifically the UTRAN cell threshold.

Alternatively,
the first threshold is specifically a difference between the LTE cell threshold and a preset offset, and the third threshold is specifically the UTRAN cell threshold.

A method for presetting the offset is the same as that in Embodiment 3, and is not described here again.

505: Perform reselection from the LTE cell to the UTRAN cell for a PS service of the terminal.

In the reselection method for a PS connected state provided by the embodiment of the present invention, when the intra-system cell handover occurs, the terminal in the connected state reads the cell reselection parameter, and performs the signal strength measurement on the LTE frequency point and the UTRAN frequency point, and when requirements of both the first threshold and third threshold are satisfied, performs a cell reselection operation, which overcomes a defect that an inter-system cell reselection operation cannot be performed on a conventional terminal even though the quality of an LTE signal is very poor when the terminal is set to an LTE only mode, and brings better service experience to a user.

### Embodiment 6

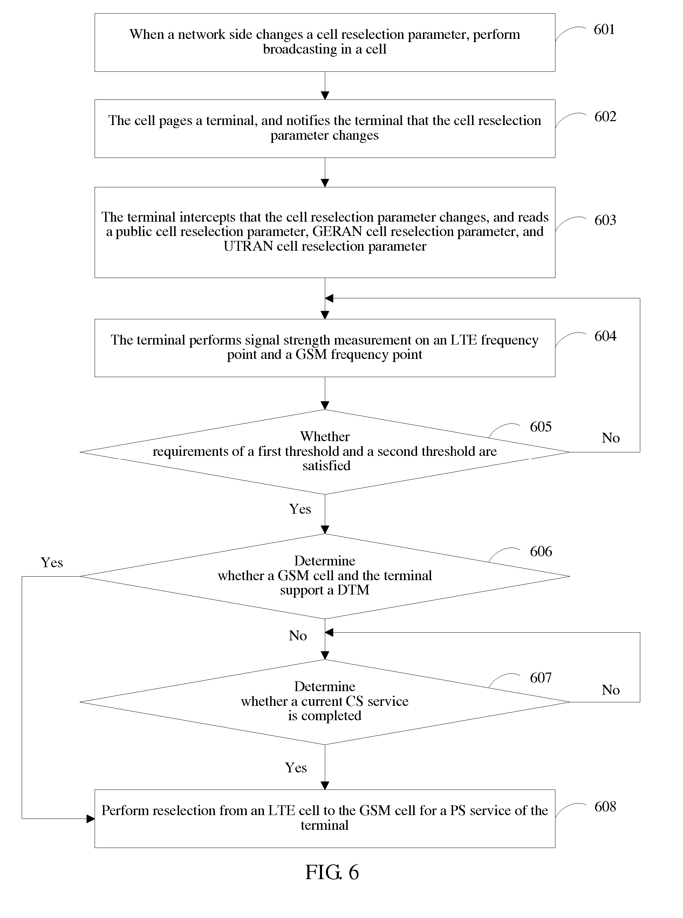

As shown in FIG. 6, an embodiment of the present invention provides a reselection method for a PS connected state, which is improved based on the foregoing embodiments.

In this embodiment, an example where a terminal is an LTE and GSM/UTRAN single-card dual-standby terminal is used for illustration, where the terminal may support three network standards: LTE, GSM, and UTRAN, and before the terminal performs reselection for a PS service state, a PS service of the terminal camps in an LTE network, the terminal establishes a data service in the LTE network and is in a connected state, and a current CS service camps in a GSM network.

A reselection method for a PS connected state specifically includes:

601: When a network side changes a cell reselection parameter, perform broadcasting in a cell.

In this embodiment, the cell reselection parameter at least includes a public cell reselection parameter, and further includes a UTRAN cell reselection parameter and/or a GERAN cell reselection parameter.

Further, the public cell reselection parameter is a system information block SIB3, a system information block of a public parameter used for the terminal to perform intra-frequency, inter-frequency, and inter-system cell reselection.

The UTRAN cell reselection parameter is a system information block SIB6, a system information block that includes parameters such as a UTRAN frequency point and a threshold and is used for the terminal to perform UTRAN inter-system cell reselection.

The GERAN cell reselection parameter is a system information block SIB7, a system information block that includes parameters such as a GSM frequency point and a threshold and is used for the terminal to perform GSM inter-system cell reselection.

A SIB is periodically delivered by the network side, and when reading, the terminal reads a system information block delivered in a next period. For example, the network side delivers system information blocks at intervals of time T, and when intending to read a system information block between time 3T and 4T, the terminal reads a system information block delivered by the network side at 4T.

602: The cell pages the terminal, and notifies the terminal that the cell reselection parameter changes.

603: The terminal intercepts that the cell reselection parameter changes, and reads the public cell reselection parameter, GERAN cell reselection parameter, and UTRAN cell reselection parameter.

It should be noted that, because the terminal used in this embodiment is an LTE and GSM/UTRAN single-card dual-standby terminal, when reading the system reselection parameter, the terminal needs to read the system information blocks SIB3, SIB6, and SIB7, where the read data includes an LTE frequency point, the UTRAN frequency point, and the GSM frequency point that are stipulated in the SIB3, SIB6, and SIB7 and used to indicate frequencies on which the terminal performs signal strength measurement in the LTE network, a UTRAN network, and the GSM network respectively, and includes a corresponding LTE cell threshold, UTRAN cell threshold, and GSM cell threshold in the SIB3, SIB6 and SIB7.

The LTE cell threshold is specifically a CellReselectionServingFreqInfo (s-NonIntraSearch), when the terminal performs signal strength measurement on the LTE frequency point in an LTE cell and finds that an LTE cell threshold requirement is satisfied, cell reselection is allowed, and the LTE cell threshold is contained in the public cell reselection parameter, namely, the system information block SIB3.

The UTRAN cell threshold is specifically a frequency point threshold requirement corresponding to a UTRAN cell. When the terminal performs signal strength measurement on the UTRAN frequency point in the UTRAN cell and finds that a UTRAN cell threshold requirement is satisfied, the network side allows the terminal to be handed over to the UTRAN cell, and the UTRAN cell threshold is contained in the UTRAN cell reselection parameter, namely, the system information block SIB6.

The GSM cell threshold is specifically a frequency point threshold requirement corresponding to a GSM cell. When the terminal performs signal strength measurement on the GSM frequency point in the GSM cell and finds that a GSM cell threshold requirement is satisfied, the network side allows the terminal to be handed over to the GSM cell, and the GSM cell threshold is contained in the GERAN cell reselection parameter, namely, the system information block SIB7.

604: The terminal performs signal strength measurement on the LTE frequency point and the GSM frequency point.

In this step, it should be noted that, that the terminal performs the signal strength measurement on the GSM frequency point further includes: determining whether the current CS service camps on the GSM cell or UTRAN cell, so as to determine a target inter-system cell to be reselected for a PS service. In this embodiment, because the current CS service of the terminal camps in the GSM network, the target inter-system cell reselected by the terminal is a GSM cell, and the signal strength measurement is only performed on the LTE frequency point and GSM frequency point.

605: Determine whether signal strength measured on the LTE frequency point by the terminal is lower than a first threshold, and signal strength measured on the GSM frequency point by the terminal is higher than a second threshold; if yes, perform step 606; and otherwise, return to step 604.

In this embodiment, the first threshold is specifically the LTE cell threshold, and the second threshold is specifically the GSM cell threshold.

Alternatively,
the first threshold may further be specifically a difference between the LTE cell threshold and a preset offset, and the second threshold is specifically the GSM cell threshold.

For the foregoing difference of the offset, specifically, offsets are preset according to Qos requirements of different services. A service with a higher Qos requirement requires a higher threshold, and therefore, when the offset is preset, the higher a Qos requirement of a service is, the smaller a value of an offset needs to be set. For example, an offset of a service with a high Qos requirement is 1 dbm, while an offset of a service with a low Qos requirement is 2 dbm, so as to ensure that the objective of trying the best to keep a PS service in an LTE network is achieved while service experience is not affected.

606: Determine whether the GSM cell and the terminal support a DTM; if not, perform step 607; and if yes, perform step 608.

607: Determine whether the CS service currently performed is completed; if yes, perform step 608; and if not, wait and return to determine whether the CS service currently performed is completed, and perform step 608 after the CS service currently performed is completed.

608: Perform reselection from the LTE cell to the GSM cell for the PS service of the terminal.

In the reselection method for a PS connected state provided by the embodiment of the present invention, when the network side changes the cell reselection parameter, the terminal that is in the connected state, can support three network standards and has a CS service camping on a GSM network performs the signal strength measurement on the LTE frequency point and the GSM frequency point by receiving the cell reselection parameter sent by the network side, and when requirements of both the first threshold and second threshold are satisfied, performs a cell reselection operation, which overcomes a defect that an inter-system cell reselection operation cannot be performed on a conventional terminal even though the quality of an LTE signal is very poor when the terminal is set to an LTE only mode, and brings better service experience to a user.

### Embodiment 7

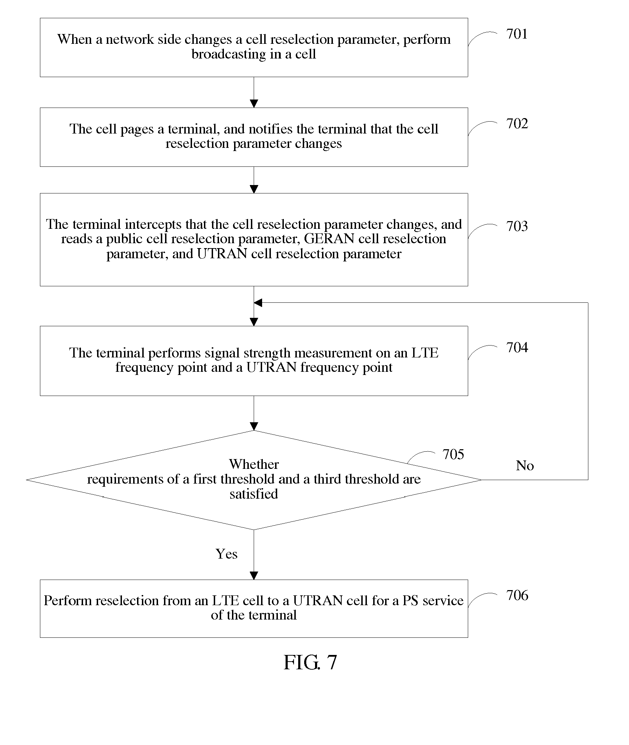

As shown in FIG. 7, an embodiment of the present invention provides a reselection method for a PS connected state, which is improved based on the foregoing embodiments.

In this embodiment, an example where a terminal is an LTE and GSM/UTRAN single-card dual-standby terminal is used for illustration, where the terminal may support three network standards: LTE, GSM, and UTRAN, and before the terminal performs reselection for a PS service state, a PS service of the terminal camps in an LTE network, the terminal establishes a data service in the LTE network and is in a connected state, and a current CS service camps in a UTRAN network.

A reselection method for a PS connected state specifically includes:

701: When a network side changes a cell reselection parameter, perform broadcasting in a cell.

In this embodiment, the cell reselection parameter at least includes a public cell reselection parameter, and further includes a UTRAN cell reselection parameter and/or a GERAN cell reselection parameter.

Further, the public cell reselection parameter is a system information block SIB3, a system information block of a public parameter used for the terminal to perform intra-frequency, inter-frequency, and inter-system cell reselection.

The UTRAN cell reselection parameter is a system information block SIB6, a system information block that includes parameters such as a UTRAN frequency point and a threshold and used for the terminal to perform UTRAN inter-system cell reselection.

The GERAN cell reselection parameter is a system information block SIB7, a system information block that includes parameters such as a GSM frequency point and a threshold and is used for the terminal to perform GSM inter-system cell reselection.

A SIB is periodically delivered by the network side, and when reading, the terminal reads a system information block delivered in a next period. For example, the network side delivers system information blocks at intervals of time T, and when intending to read a system information block between time 3T and 4T, the terminal reads a system information block delivered by the network side at 4T.

702: The cell pages the terminal, and notifies the terminal that the cell reselection parameter changes.

703: The terminal intercepts that the cell reselection parameter changes, and reads the public cell reselection parameter, GERAN cell reselection parameter, and UTRAN cell reselection parameter.

It should be noted that, because the terminal used in this embodiment is an LTE and GSM/UTRAN single-card dual-standby terminal, when reading the system reselection parameter, the terminal needs to read the system information blocks SIB3, SIB6, and SIB7, where read data includes an LTE frequency point, the UTRAN frequency point, and the GSM frequency point that are stipulated in the SIB3, SIB6, and SIB7 and used to indicate frequencies on which the terminal performs the signal strength measurement in the LTE network, the UTRAN network, and a GSM network respectively, and includes a corresponding LTE cell threshold, UTRAN cell threshold, and GSM cell threshold in the SIB3, SIB6 and SIB7.

The LTE cell threshold is specifically a CellReselectionServingFreqInfo (s-NonIntraSearch), when the terminal performs signal strength measurement on the LTE frequency point in an LTE cell and finds that an LTE cell threshold requirement is satisfied, cell reselection is allowed, and the LTE cell threshold is contained in the public cell reselection parameter, namely, the system information block SIB3.

The UTRAN cell threshold is specifically a frequency point threshold requirement corresponding to a UTRAN cell. When the terminal performs signal strength measurement on the UTRAN frequency point in the UTRAN cell and finds that a UTRAN cell threshold requirement is satisfied, the network side allows the terminal to be handed over to the UTRAN cell, and the UTRAN cell threshold is contained in the UTRAN cell reselection parameter, namely, the system information block SIB6.

The GSM cell threshold is specifically a frequency point threshold requirement corresponding to a GSM cell. When the terminal performs the signal strength measurement on the GSM frequency point in the GSM cell and finds that a GSM cell threshold requirement is satisfied, the network side allows the terminal to be handed over to the GSM cell, and the GSM cell threshold is contained in the GERAN cell reselection parameter, namely, the system information block SIB7.

704: The terminal performs signal strength measurement on the LTE frequency point and UTRAN frequency point.

In this step, it should be noted that, that the terminal performs the signal strength measurement on the UTRAN frequency point further includes: determining whether the current CS service camps on the GSM cell or UTRAN cell, so as to determine a target inter-system cell to be reselected for a PS service, and in this embodiment, because the current CS service of the terminal camps in the UTRAN network, the target inter-system cell reselected by the terminal is a UTRAN cell, and the signal strength measurement is only performed on the LTE frequency point and UTRAN frequency point.

705: Determine whether signal strength measured on the LTE frequency point by the terminal is lower than a first threshold, and signal strength measured on the UTRAN frequency point by the terminal is higher than a third threshold; if yes, perform step 706; and otherwise, return to step 704.

In this embodiment, the first threshold is specifically the LTE cell threshold, and the third threshold is specifically the UTRAN cell threshold.

Alternatively,
the first threshold is specifically a difference between the LTE cell threshold and a preset offset, and the third threshold is specifically the UTRAN cell threshold.

A method for presetting the offset is the same as that in Embodiment 2, and is not described here again.

It should be noted that, during offset presetting, the value of the offset is related to a radio access standard of a target network to be reselected by the terminal. For example, in a case where the UTRAN network and the GERAN network are in a same carrier-to-interference ratio due to a frequency expansion technology provided by the UTRAN, the UTRAN can provide higher Qos than the GERAN network, and therefore, for services with a same Qos requirement, the offset set when the target network is a UTRAN may be lower than the offset set when the target network is a GERAN. For example, the offset is set to 2 dbm when the target network is the UTRAN, and set to 4 dbm when the target network is the GERAN. In this way, it is ensured that migration of the terminal to the UTRAN network is easier than migration of the terminal to the GERAN network on the premise of guaranteeing the Qos requirement of a service in the LTE network.

706: Perform reselection from the LTE cell to the UTRAN cell for the PS service of the terminal.

In the reselection method for a PS connected state provided by the embodiment of the present invention, when the network side changes the cell reselection parameter, the terminal that is in the connected state, can support three network standards and has CS service camping in the UTRAN network performs the signal strength measurement on the LTE frequency point and the UTRAN frequency point by receiving the cell reselection parameter sent by the network side, and when requirements of both the first threshold and third threshold are satisfied, performs a cell reselection operation, which overcomes a defect that an inter-system cell reselection operation cannot be performed on a conventional terminal even though the quality of an LTE signal is very poor when the terminal is set to an LTE only mode, and brings better service experience to a user.

### Embodiment 8

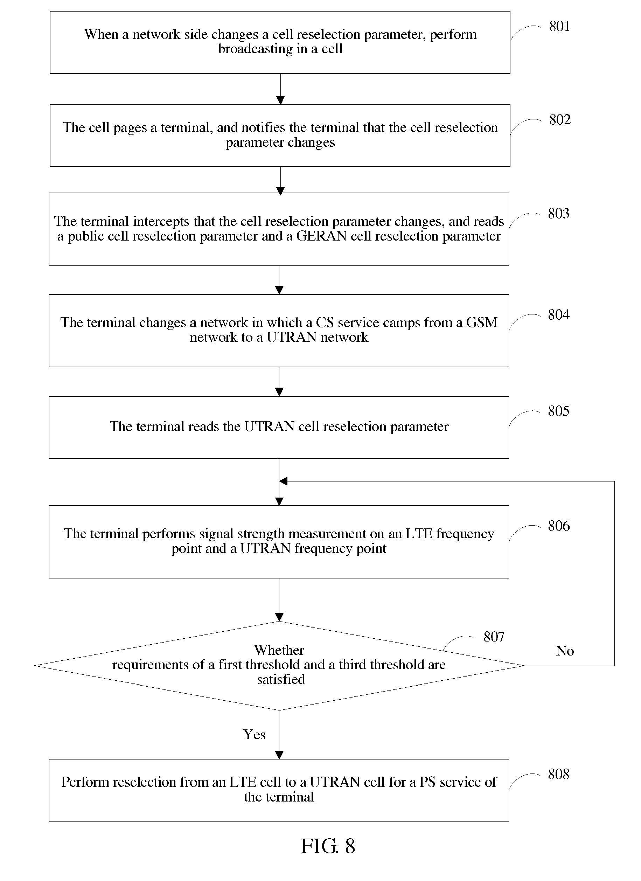

As shown in FIG. 8, an embodiment of the present invention provides a reselection method for a PS connected state, which is improved based on the foregoing embodiments.

In this embodiment, an example where a terminal is an LTE and GSM/UTRAN single-card dual-standby terminal is used for illustration, where the terminal may support three network standards: LTE, GSM, and UTRAN, before the terminal performs reselection for a PS service state, a PS service of the terminal camps in an LTE network, the terminal establishes a data service in the LTE network and is in a connected state, and a current CS service camps in a GSM network, and after the terminal reads a SIB7 and before reselection for the PS service, a network standard of a network in which the CS service camps changes from the GSM to the UTRAN.

A reselection method for a PS connected state specifically includes:

801: When a network side changes a cell reselection parameter, perform broadcasting in a cell.

In this embodiment, the cell reselection parameter at least includes a public cell reselection parameter, and further includes a UTRAN cell reselection parameter and/or a GERAN cell reselection parameter.

Further, the public cell reselection parameter is a system information block SIB3, a system information block of a public parameter used for the terminal to perform intra-frequency, inter-frequency, and inter-system cell reselection.

The UTRAN cell reselection parameter is a system information block SIB6, a system information block that includes parameters such as a UTRAN frequency point and a threshold and is used for the terminal to perform UTRAN inter-system cell reselection.

The GERAN cell reselection parameter is a system information block SIB7, a system information block that includes parameters such as a GSM frequency point and a threshold and is used for the terminal to perform GSM inter-system cell reselection.

A SIB is periodically delivered by the network side, and when reading, the terminal reads a system information block delivered in a next period, for example, the network side delivers system information blocks at intervals of time T, and when intending to read a system information block between time 3T and 4T, the terminal reads a system information block delivered by the network side at 4T.

802: The cell pages the terminal, and notifies the terminal that the cell reselection parameter changes.

803: The terminal intercepts that the cell reselection parameter changes, and reads the public cell reselection parameter and the GERAN cell reselection parameter.

It should be noted that, before step 803, the method further includes that the terminal determines whether its own CS service camps in the GSM network or a UTRAN network, and selects an inter-system cell on which the CS service of the terminal camps as a target inter-system cell to be selected for the PS service. In this embodiment, the CS service of the terminal currently camps in the GSM network, so only the public cell reselection parameter and the GERAN cell reselection parameter are selected to be read.

804: The terminal changes the network in which the CS service camps from the GSM network to the UTRAN network.

805: The terminal reads the UTRAN cell reselection parameter.

806: The terminal performs signal strength measurement on an LTE frequency point and the UTRAN frequency point.

807: Determine whether signal strength measured on the LTE frequency point by the terminal is lower than a first threshold, and signal strength measured on the UTRAN frequency point by the terminal is higher than a third threshold; if yes, perform step 808; and otherwise, return to step 806.

808: Perform reselection from an LTE cell to a UTRAN cell for the PS service of the terminal.

In the reselection method for a PS connected state provided by the embodiment of the present invention, when the network side changes the cell reselection parameter and a standard type of the network in which the CS service camps changes, the terminal that is in the connected state and can support three network standards performs the signal strength measurement on the LTE frequency point and the UTRAN frequency point by receiving the cell reselection parameter sent by the network side, and when requirements of both the first threshold and third threshold are satisfied, performs a cell reselection operation, which overcomes a defect that an inter-system cell reselection operation cannot be performed on a conventional terminal even though the quality of an LTE signal is very poor when the terminal is set to an LTE only mode, and brings better service experience to a user.

### Embodiment 9

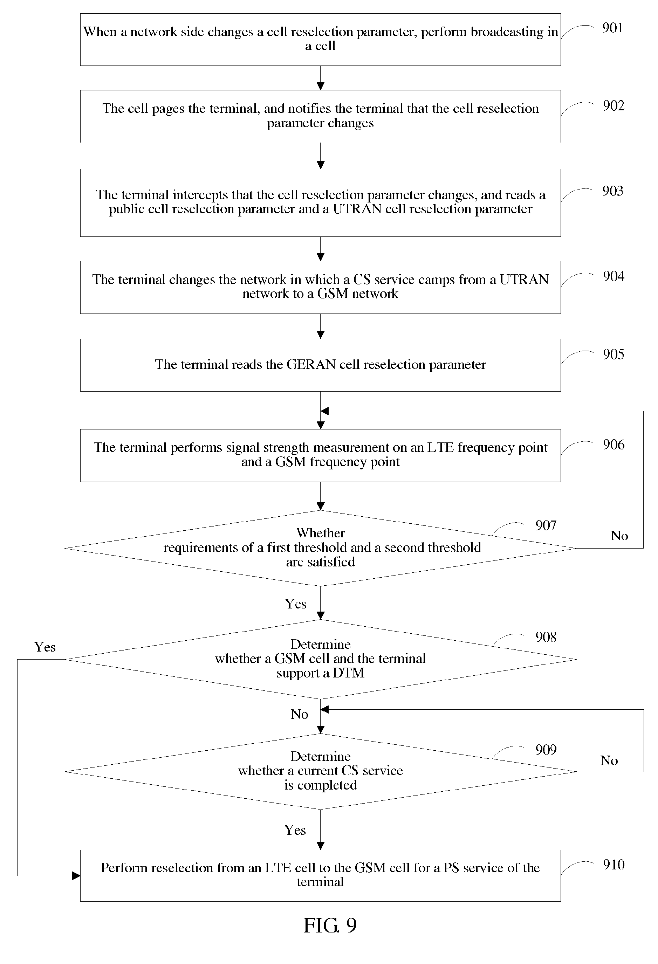

As shown in FIG. 9, an embodiment of the present invention provides a reselection method for a PS connected state, which is improved based on the foregoing embodiments.

In this embodiment, an example where a terminal is an LTE and GSM/UTRAN single-card dual-standby terminal is used for illustration, where the terminal may support three network standards: LTE, GSM, and UTRAN, and before the terminal performs reselection for a PS service state, a PS service of the terminal camps in an LTE network, the terminal establishes a data service in the LTE network and is in a connected state, and a current CS service camps in a UTRAN network, and after the terminal reads a SIB6 and before the reselection for a PS service, a network standard of the network in which the CS service camps changes from the UTRAN to the GSM.

901: When a network side changes a cell reselection parameter, perform broadcasting in a cell.

In this embodiment, the cell reselection parameter at least includes a public cell reselection parameter, and further includes a UTRAN cell reselection parameter and/or a GERAN cell reselection parameter.

Further, the public cell reselection parameter is a system information block SIB3, a system information block of a public parameter used for the terminal to perform intra-frequency, inter-frequency, and inter-system cell reselection.

The UTRAN cell reselection parameter is a system information block SIB6, a system information block that includes parameters such as a UTRAN frequency point and a threshold and is used for the terminal to perform UTRAN inter-system cell reselection.

The GERAN cell reselection parameter is a system information block SIB7, a system information block that includes parameters such as a GSM frequency point and a threshold and is used for the terminal to perform GSM inter-system cell reselection.

A SIB is periodically delivered by the network side, and when reading, the terminal reads a system information block delivered in a next period, for example, the network side delivers system information blocks at intervals of time T, and when intending to read a system information block between time 3T and 4T, the terminal reads a system information block delivered by the network side at 4T.

902: The cell pages the terminal, and notifies the terminal that the cell reselection parameter changes.

903: The terminal intercepts that the cell reselection parameter changes, and reads the public cell reselection parameter and the UTRAN cell reselection parameter.

It should be noted that, before step 903, the method further includes that the terminal determines whether its own CS service camps in a GSM network or the UTRAN network, and selects an inter-system cell on which the CS service of the terminal camps as a target inter-system cell to be selected for the PS service. In this embodiment, the current CS service of the terminal camps in the UTRAN network, so only the public cell reselection parameter and UTRAN cell reselection parameter are selected to be read.

904: The terminal changes the network in which the CS service camps from the UTRAN network to the GSM network.

905: The terminal reads the GERAN cell reselection parameter.

906: The terminal performs signal strength measurement on an LTE frequency point and a GSM frequency point.

907: Determine whether signal strength measured on the LTE frequency point by the terminal is lower than a first threshold, and signal strength measured on the GSM frequency point by the terminal is higher than a second threshold; if yes, perform step 908; and otherwise, return to step 906.

908: Determine whether the GSM cell and the terminal support a DTM; if yes, perform step 909; and if not, perform step 910.

909: Determine whether a CS service currently performed is completed; if not, perform step 910; and if yes, wait and return to determine whether the CS service currently performed is completed, and perform step 910 after the CS service currently performed is completed.

910: Perform reselection from an LTE cell to a GSM cell for the PS service of the terminal.

In the reselection method for a PS connected state provided by the embodiment of the present invention, when the network side changes the cell reselection parameter and a standard type of the network in which the CS service camps changes, the terminal that is in the connected state and can support three network standards performs the signal strength measurement on the LTE frequency point and the GSM frequency point by receiving the cell reselection parameter sent by the network side, and when requirements of both the first threshold and second threshold are satisfied, performs a cell reselection operation, which overcomes a defect that an inter-system cell reselection operation cannot be performed on a conventional terminal even though the quality of an LTE signal is very poor when the terminal is set to an LTE only mode, and brings better service experience to a user.

### Embodiment 10

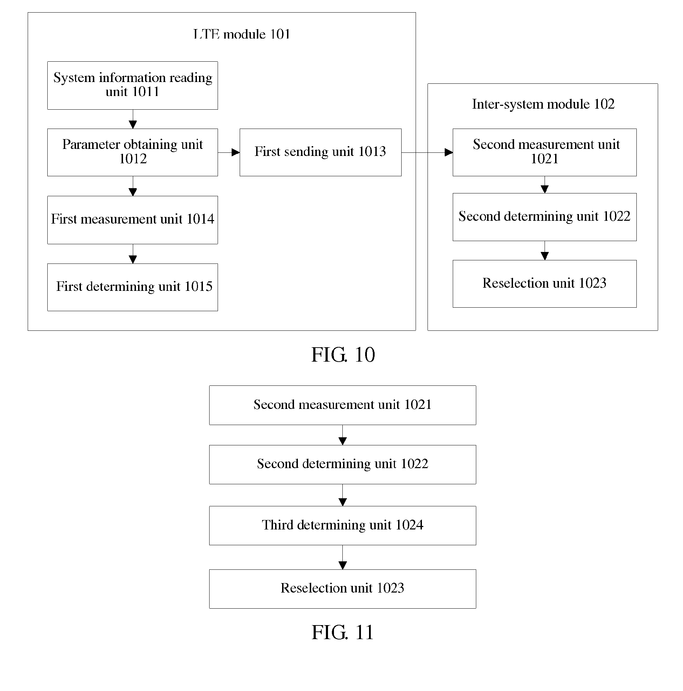

An embodiment of the present invention provides a reselection terminal for a PS connected state, and as shown in FIG. 10, the terminal includes an LTE module 101 and an inter-system module 102;
where, the LTE module 101 includes:
a system information reading unit 1011, configured to: when cell system information changes or an intra-system cell handover occurs, read a SIB3 delivered by a network side, and read a SIB6 and/or a SIB7;
a parameter obtaining unit 1012, configured to obtain a first threshold and an LTE frequency point according to the SIB3, and obtain an inter-system reselection threshold and an inter-system frequency point according to the SIB6 and/or SIB7;
a first sending unit 1013, configured to send the inter-system reselection threshold and inter-system frequency point to the inter-system module;
a first measurement unit 1014, configured to perform signal strength measurement on the LTE frequency point; and
a first determining unit 1015, configured to determine whether signal strength measured on the LTE frequency point is lower than the first threshold; and
the inter-system module 102 includes:
a second measurement unit 1021, configured to receive the inter-system reselection threshold and inter-system frequency point that are sent by the first sending unit 1013, and perform signal strength measurement on the inter-system frequency point;
a second determining unit 1022, configured to determine whether signal strength measured on the inter-system frequency point is higher than the inter-system reselection threshold; and
a reselection unit 1023, configured to: when it is satisfied that the signal strength measured on the LTE frequency point is lower than the first threshold and the signal strength measured on the inter-system frequency point is higher than the inter-system reselection threshold, reselect a corresponding inter-system cell for a PS service.

Further, the SIB7 includes a second threshold and a global system for mobile communications GSM frequency point;
correspondingly, as shown in FIG. 11, when the inter-system threshold is the second threshold, and the inter-system frequency point is the GSM frequency point, as shown in FIG. 11, the inter-system module 102 further includes:
a third determining unit 1024, configured to: before the reselection unit 1023 reselects the corresponding inter-system cell for the PS service, determine whether the terminal and the corresponding inter-system cell support a DTM; if yes, instruct the reselection unit 1023 to reselect the corresponding inter-system cell for the PS service; and if not, wait until a circuit switched CS service currently performed by the terminal is completed, and then instruct the reselection unit 1023 to reselect the corresponding inter-system cell for the PS service.

Further, the SIB6 includes a third threshold and a UTRAN frequency point;
correspondingly, the inter-system reselection threshold includes the second threshold and/or the third threshold; and
the inter-system frequency point includes the GSM frequency point and/or the UTRAN frequency point.

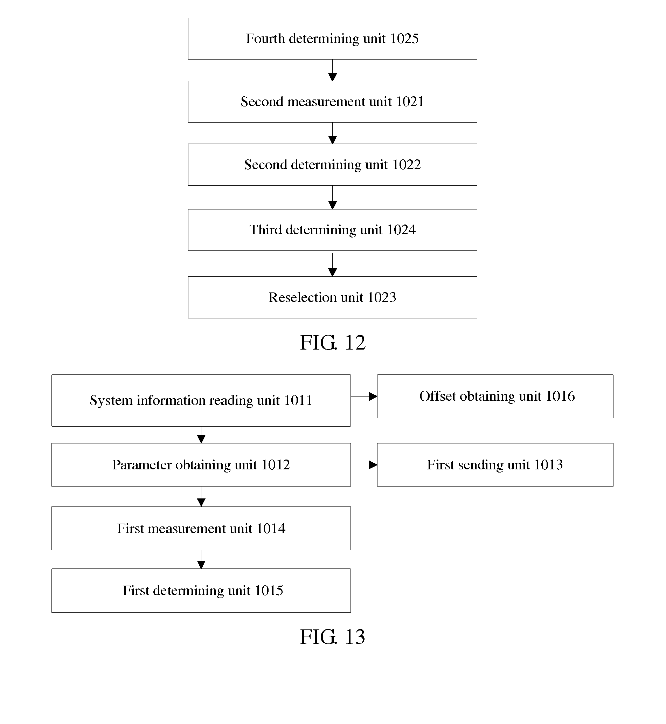

Further, as shown in FIG. 12, the inter-system module 102 further includes:
a fourth determining unit 1025, configured to: before the system information reading unit 1011 reads the SIB3 delivered by the network side, and reads the SIB6 and/or SIB7, obtain whether an inter-system cell on which the CS service currently performed by the terminal camps is a GSM cell or a UTRAN cell, so that the terminal determines a target inter-system cell to which the PS service is to be handed over.

Further, when the inter-system cell on which the CS service currently performed by the terminal camps is the GSM cell, the second measurement unit 1021 is specifically configured to perform signal strength measurement on the GSM frequency point;
the second determining unit 1022 is specifically configured to determine whether signal strength measured on the GSM frequency point is higher than the second threshold; and
the reselection unit 1023 is specifically configured to: when it is satisfied that the signal strength measured on the LTE frequency point is lower than the first threshold and the signal strength measured on the GSM frequency point is higher than the second threshold, receive a reselection command sent by the GSM cell, and reselect the GSM cell for the PS service; and
correspondingly, when the inter-system cell on which the CS service currently performed by the terminal camps is the UTRAN cell, the second measurement unit 1021 is specifically configured to perform signal strength measurement on the UTRAN frequency point;
the second determining unit 1022 is specifically configured to determine whether signal strength measured on the UTRAN frequency point is higher than the third threshold; and
the reselection unit 1023 is specifically configured to: when it is satisfied that the signal strength measured on the LTE frequency point is lower than the first threshold and the signal strength measured on the UTRAN frequency point is higher than the third threshold, receive a reselection command sent by the UTRAN cell, and reselect the UTRAN cell for a PS service.

Further, that the parameter obtaining unit obtains the first threshold according to the SIB3 specifically includes:
reading an LTE cell threshold in the SIB3, and using the LTE cell threshold as the first threshold;
   or,
reading an LTE cell threshold in the SIB3, and obtaining a difference between the LTE cell threshold and a preset offset to obtain the first threshold.

Further, as shown in FIG. 13, the LTE module 101 further includes:
an offset obtaining unit 1016, configured to: before the parameter obtaining unit obtains the first threshold, preset the offset according to the corresponding inter-system cell and a quality-of-service requirement of a PS service currently performed by the terminal.

In the reselection apparatus for a PS connected state provided by the embodiment of the present invention, when the network side changes the cell reselection parameter or when the intra-system cell handover occurs, the terminal in the connected state reads the SIB3 delivered by the network side, and reads the SIB6 and/or SIB7, performs the signal strength measurement on the LTE frequency point and the inter-system frequency point, and when requirements of the first threshold and the inter-system reselection threshold are satisfied, performs a cell reselection operation, which overcomes a defect that an inter-system cell reselection operation cannot be performed on a conventional terminal even though the quality of an LTE signal is very poor when the terminal is set to an LTE only mode, and brings better service experience to a user.

It should be noted that, the reselection apparatus for a PS connected state provided by the foregoing embodiment is just illustrated through dividing the foregoing functional modules, and in an actual application, the foregoing functions may be assigned to different functional modules to complete as required, that is, the internal structure of the reselection apparatus for a PS connected state may be divided into different functional modules, so as to complete all or a part of functions described above. In addition, the reselection apparatus for a PS connected state provided by the foregoing embodiment and the embodiments of the reselection method for a PS connected state belong to a same conception, and its specific implementation process is described in the method embodiments in detail, and is not described here again.

All or part of the contents in the technical solutions provided in the foregoing embodiments may be implemented by a software program, and the software program is stored in a readable storage medium, that is, a storage medium such as a computer hard disk, an optical disk, or a floppy disk.

The foregoing descriptions are merely exemplary embodiments of the present invention, and are not intended to limit the present invention. Any modification, equivalent replacement, or improvement made within the spirit and principle of the present invention shall all fall within the protection scope of the present invention.

## Claims

1. A reselection method for a packet switched PS connected state, comprising:
reading a third system information block SIB3 delivered by a network side and reading a sixth system information block SIB6 and/or a seventh system information block SIB7, when cell system information changes or an intra-system cell handover occurs;
obtaining a first threshold and a long term evolution LTE frequency point according to the SIB3, and obtaining an inter-system reselection threshold and an inter-system frequency point according to the SIB6 and/or SIB7;
performing signal strength measurement on the LTE frequency point and the inter-system frequency point; and
reselecting a corresponding inter-system cell for a PS service, if signal strength measured on the LTE frequency point is lower than the first threshold and signal strength measured on the inter-system frequency point is higher than the inter-system reselection threshold.

2. The method according to claim 1, wherein the SIB7 comprises a second threshold and a global system for mobile communications GSM frequency point;
correspondingly, when the inter-system threshold is the second threshold, and the inter-system frequency point is the GSM frequency point, before the reselecting a corresponding inter-system cell for a PS service, the method further comprises:
determining whether a terminal and the corresponding inter-system cell support a dual transfer mode DTM;
if the terminal and the corresponding inter-system cell support the DTM, reselecting the corresponding inter-system cell for the PS service; and
if the terminal and the corresponding inter-system cell do not support the DTM, reselecting the corresponding inter-system cell for the PS service after a circuit switched CS service currently performed by the terminal is completed.

3. The method according to claim 2, wherein the SIB6 comprises a third threshold and a UMTS terrestrial radio access network UTRAN frequency point;
correspondingly, the inter-system reselection threshold comprises the second threshold and/or the third threshold; and
the inter-system frequency point comprises the GSM frequency point and/or the UTRAN frequency point.

4. The method according to claim 1, wherein before the reading a SIB3 delivered by a network side and reading a SIB6 and/or a SIB7, the method further comprises:
obtaining whether an inter-system cell on which a CS service currently performed by the terminal camps is a GSM cell or a UTRAN cell, so that the terminal determines a target inter-system cell to which the PS service is to be handed over.

5. The method according to claim 4, wherein the performing signal strength measurement on the LTE frequency point and the inter-system frequency point, and if signal strength measured on the LTE frequency point is lower than the first threshold and signal strength measured on the inter-system frequency point is higher than the inter-system reselection threshold, reselecting a corresponding inter-system cell for a PS service, specifically comprises:
when the inter-system cell on which the CS service currently performed by the terminal camps is a GSM cell, performing signal strength measurement on the LTE frequency point and the GSM frequency point, and if the signal strength measured on the LTE frequency point is lower than the first threshold and signal strength measured on the GSM frequency point is higher than the second threshold, reselecting the GSM cell for the PS service;
or,
when the inter-system cell on which the CS service currently performed by the terminal camps is a UTRAN cell, performing signal strength measurement on the LTE frequency point and the UTRAN frequency point, and if the signal strength measured on the LTE frequency point is lower than the first threshold and signal strength measured on the UTRAN frequency point is higher than the third threshold, reselecting the UTRAN cell for the PS service.

6. The method according to claim 1, wherein the obtaining a first threshold according to the SIB3 specifically comprises:
reading an LTE cell threshold in the SIB3, and using the LTE cell threshold as the first threshold;
or,
reading an LTE cell threshold in the SIB3, and obtaining a difference between the LTE cell threshold and a preset offset to obtain the first threshold.

7. The method according to claim 6, wherein before the obtaining the first threshold, the method further comprises:
presetting the offset according to the corresponding inter-system cell and a quality-of-service requirement of a PS service currently performed by the terminal.

8. A reselection terminal for a PS connected state, wherein the apparatus comprises: an LTE module and an inter-system module;
the LTE module comprises:
a system information reading unit, configured to, when cell system information changes or an intra-system cell handover occurs, read a SIB3 delivered by a network side, and read a SIB6 and/or a SIB7;
a parameter obtaining unit, configured to obtain a first threshold and an LTE frequency point according to the SIB3, and obtain an inter-system reselection threshold and an inter-system frequency point according to the SIB6 and/or SIB7;
a first sending unit, configured to send the inter-system reselection threshold and inter-system frequency point to the inter-system module;
a first measurement unit, configured to perform signal strength measurement on the LTE frequency point; and
a first determining unit, configured to determine whether signal strength measured on the LTE frequency point is lower than the first threshold; and
the inter-system module comprises:
a second measurement unit, configured to receive the inter-system reselection threshold and inter-system frequency point that are sent by the first sending unit, and perform signal strength measurement on the inter-system frequency point;
a second determining unit, configured to determine whether signal strength measured on the inter-system frequency point is higher than the inter-system reselection threshold; and
a reselection unit, configured to, when the signal strength measured on the LTE frequency point is lower than the first threshold and the signal strength measured on the inter-system frequency point is higher than the inter-system reselection threshold, receive a reselection command sent by a corresponding inter-system cell, and reselect the corresponding inter-system cell for a PS service.

9. The terminal according to claim 8, wherein the SIB7 comprises a second threshold and a GSM frequency point; and
correspondingly, when the inter-system threshold is the second threshold, and the inter-system frequency point is the GSM frequency point, the inter-system module further comprises:
a third determining unit, configured to, before the reselection unit reselects the corresponding inter-system cell for the PS service, determine whether the terminal and the corresponding inter-system cell support a DTM; if the terminal and the corresponding inter-system cell support the DTM, instruct the reselection unit to reselect the corresponding inter-system cell for the PS service; and if the terminal and the corresponding inter-system cell do not support the DTM, instruct the reselection unit to reselect the corresponding inter-system cell for the PS service after a circuit switched CS service currently performed by the terminal is completed.

10. The terminal according to claim 9, wherein the SIB6 comprises a third threshold and a UTRAN frequency point;
correspondingly, the inter-system reselection threshold comprises the second threshold and/or the third threshold; and
the inter-system frequency point comprises the GSM frequency point and/or the UTRAN frequency point.

11. The terminal according to claim 8, wherein the inter-system module further comprises:
a fourth determining unit, configured to, before the system information reading unit reads the SIB3 delivered by the network side, and reads the SIB6 and/or SIB7, obtain whether an inter-system cell on which a CS service currently performed by the terminal camps is a GSM cell or a UTRAN cell, so that the terminal determines a target inter-system cell to which the PS service is to be handed over.

12. The terminal according to claim 11, wherein when the inter-system cell on which the CS service currently performed by the terminal camps is a GSM cell, the second measurement unit is specifically configured to perform signal strength measurement on the GSM frequency point;
the second determining unit is specifically configured to determine whether signal strength measured on the GSM frequency point is higher than the second threshold; and
the reselection unit is specifically configured to, when the signal strength measured on the LTE frequency point is lower than the first threshold and the signal strength measured on the GSM frequency point is higher than the second threshold, receive a reselection command sent by the GSM cell, and reselect the GSM cell for the PS service; and
correspondingly, when the inter-system cell on which the CS service currently performed by the terminal camps is a UTRAN cell, the second measurement unit is specifically configured to perform signal strength measurement on the UTRAN frequency point;
the second determining unit is specifically configured to determine whether signal strength measured on the UTRAN frequency point is higher than the third threshold; and
the reselection unit is specifically configured to, when the signal strength measured on the LTE frequency point is lower than the first threshold and the signal strength measured on the UTRAN frequency point is higher than the third threshold, start a cell reselection process, and reselect the UTRAN cell for the PS service.

13. The terminal according to claim 8, wherein that the parameter obtaining unit obtains the first threshold according to the SIB3 specifically comprises:
reading an LTE cell threshold in the SIB3, and using the LTE cell threshold as the first threshold;
or,
reading an LTE cell threshold in the SIB3, and obtaining a difference between the LTE cell threshold and a preset offset to obtain the first threshold.

14. The terminal according to claim 13, wherein the LTE module further comprises:
an offset obtaining unit, configured to, before the parameter obtaining unit obtains the first threshold, preset the offset according to the corresponding inter-system cell and a quality-of-service requirement of a PS service currently performed by the terminal.
